(19) Europäisches Patentamt European Patent Office Office européen des brevets

(11) EP 2 955 024 B1

(12) **EUROPEAN PATENT SPECIFICATION**

(45) Date of publication and mention of the grant of the patent:
**18.03.2020 Bulletin 2020/12**

(51) Int Cl.:
*B32B 27/36* (2006.01)    *B32B 27/00* (2006.01)
*C08J 7/04* (2020.01)

(21) Application number: **13874610.2**

(22) Date of filing: **10.12.2013**

(86) International application number:
**PCT/JP2013/083103**

(87) International publication number:
**WO 2014/122851 (14.08.2014 Gazette 2014/33)**

(54) **RELEASE FILM**

ABLÖSEFILM

FILM ANTI-ADHÉRENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.02.2013 JP 2013021240**

(43) Date of publication of application:
**16.12.2015 Bulletin 2015/51**

(73) Proprietor: **Mitsubishi Chemical Corporation Tokyo (JP)**

(72) Inventors:
• **FUNATSU, Ryosuke**
  **Maibara-shi**
  **Shiga 521-0234 (JP)**
• **KAWASAKI, Taishi**
  **Maibara-shi**
  **Shiga 521-0234 (JP)**

(74) Representative: **Ter Meer Steinmeister & Partner Patentanwälte mbB**
**Nymphenburger Straße 4**
**80335 München (DE)**

(56) References cited:
**EP-A1- 2 561 985**    **EP-A1- 2 565 034**
**EP-A1- 2 679 620**    **JP-A- H03 100 027**
**JP-A- 2002 322 373**    **JP-A- 2006 022 136**
**JP-A- 2011 099 097**    **JP-A- 2012 172 057**

• **Anonymous: "Blocked Isocyanates and Their Usage in Plastic Coatings Applications", , 1 August 2004 (2004-08-01), XP055292680, Retrieved from the Internet: URL:http://www.pcimag.com/articles/85231-blocked-isocyanates-and-their-usage-in-plastic-coatings-applications [retrieved on 2016-08-02]**

**Description**

TECHNICAL FIELD

The present invention relates to a release film, and more particularly, provides a release film that can be suitably used, in particular, in the applications requiring a heat resistance, for example, as a processing film used in various processes, including those films for transfer such as in-mold transfer, for production of flexible printed wiring boards, for process sheets for production of plastic sheets, etc.

BACKGROUND ART

Polyester films typically such as polyethylene terephthalate films or polyethylene naphthalate films have been extensively used in various applications because of excellent properties such as mechanical strength, dimensional stability, flatness, heat resistance, chemical resistance and optical properties as well as excellent cost performance. However, when using the polyester film as a release film, the film tends to be insufficient in releasing property against various resins and adhesives, and therefore has problems such as lack of practicability. For this reason, there have been conventionally made various studies on a method of laminating a release coating film on a surface of the polyester film. For example, there has been proposed the method of applying a long-chain alkyl group-containing resin onto a surface of a polyester film to form a laminated film (Patent Literatures 1 and 2).

As the applications of the polyester film used as a release film, there may be mentioned films to which heat or pressure is applied during various processes, for example, those films for transfer such as in-mold transfer, for production of flexible printed wiring boards, for process sheets for production of plastic sheets, etc. When using the film in these applications in which the film is exposed to heat, etc., such a release film as produced by the aforementioned method tends to be deteriorated in releasing property, so that there tends to arise such a problem that the film is hardly peeled off, or a releasing agent is transferred onto a counterpart member to cause contamination thereof. Therefore, there is a demand for release films having an excellent heat resistance without these problems.

CITATION LIST

PATENT LITERATURE

Patent Literature 1: Japanese Patent Application Laid-Open (KOKAI) No. 2002-240016
Patent Literature 2: Japanese Patent Application Laid-Open (KOKAI) No. 2006-022136

SUMMARY OF INVENTION

TECHNICAL PROBLEM

The present invention has been accomplished in view of the above conventional problems. An object of the present invention is to provide a release film that can be suitably used in the applications as a processing film used in various processes, including those films for transfer such as in-mold transfer, for production of flexible printed wiring boards, for process sheets for production of plastic sheets, etc., and is free from deterioration in releasing property owing to heat applied upon processing.

SOLUTION TO PROBLEM

As a result of the present inventors' earnest study in view of the above problems, it has been found that the above problems can be readily solved by using a release film having a specific structure. The present invention has been attained on the basis of this finding.

That is, in an aspect of the present invention, there is provided a release film comprising a polyester film and a coating layer formed on at least one surface of the polyester film, the coating layer being prepared from a coating solution comprising a release agent and an active methylene blocked isocyanate compound.

ADVANTAGEOUS EFFECTS OF INVENTION

In accordance with the present invention, it is possible to provide a release film that can exhibit a high heat resistance and suffer from less deterioration in releasing property owing to heat upon processing, when used as various processing films for production of antireflection transfer films.

DESCRIPTION OF EMBODIMENTS

The polyester film constituting the release film of the present invention may have either a single layer structure or a multilayer structure. Unless departing from the scope of the present invention, the polyester film may have not only a two or three layer structure but also a four or more multilayer structure, and the layer structure of the polyester film is not particularly limited.

The polyester may be either a homopolyester or a copolyester. The homopolyester is preferably obtained by polycondensing an aromatic dicarboxylic acid and an aliphatic glycol. Examples of the aromatic dicarboxylic acid include terephthalic acid and 2,6-naphthalenedicarboxylic acid. Examples of the aliphatic glycol include ethylene glycol, diethylene glycol and 1,4-cyclohexanedimethanol. Typical examples of the polyesters include polyethylene terephthalate and the like. On the other hand, as a dicarboxylic acid component of the copolyester, there may be mentioned one or more compounds selected from the group consisting of isophthalic acid, phthalic acid, terephthalic acid, 2,6-naphthalenedicarboxylic acid, adipic acid, sebacic acid and oxycarboxylic acids (such as, for example, p-oxybenzoic acid). As a glycol component of the copolyester, there may be mentioned one or more compounds selected from the group consisting of ethylene glycol, diethylene glycol, propylene glycol, butanediol, 4-cyclohexanedimethanol and neopentyl glycol.

The polymerization catalyst for production of the polyester is not particularly limited, and any conventionally known compounds may be used as the polymerization catalyst. Examples of the polymerization catalyst include an antimony compound, a titanium compound, a germanium compound, a manganese compound, an aluminum compound, a magnesium compound and a calcium compound.

For the main purposes of imparting an easy-slipping property to the film and preventing occurrence of flaws in the film in the respective steps, particles may be compounded in the polyester film. When compounding the particles in the film, the kind of particles to be compounded in the polyester film is not particularly limited as long as the particles can impart an easy-slipping property to the film. Specific examples of the particles include inorganic particles such as particles of silica, calcium carbonate, magnesium carbonate, barium carbonate, calcium sulfate, calcium phosphate, magnesium phosphate, kaolin, aluminum oxide and titanium oxide, and organic particles such as particles of acrylic reins, styrene resins, urea resins, phenol resins, epoxy resins and benzoguanamine resins, etc. Further, there may also be used deposited particles obtained by precipitating and finely dispersing a part of metal compounds such as a catalyst during the process for production of the polyester.

On the other hand, the shape of the particles used in the polyester film is also not particularly limited, and may be any of a spherical shape, a massive shape, a bar shape, a flat shape, etc. Further, the hardness, specific gravity, color and the like of the particles are also not particularly limited. These particles may be used in combination of any two or more kinds thereof, if required.

The average particle diameter of the above particles is usually in the range of not more than 5 $\mu$m and preferably 0.1 to 3 $\mu$m. When the average particle diameter of the particles is more than 5 $\mu$m, the obtained film tends to have an excessively coarse surface roughness, so that a surface shape of a member to be transferred with the film tends to be adversely affected.

The content of the particles in the polyester film is usually not more than 5% by weight and preferably 0.0003 to 3% by weight. When the content of the particles in the polyester layer is more than 5% by weight, the resulting film tends to be insufficient in transparency.

The method of adding the particles to the polyester film is not particularly limited, and any conventionally known methods can be suitably used therefor. For example, the particles may be added at any optional stages in the process for production of the polyester. The particles are preferably added to the polyester after completion of the esterification reaction or transesterification reaction.

Meanwhile, the above polyester film may also comprise, in addition to the above particles, known additives such as an antioxidant, an antistatic agent, a thermal stabilizer, a lubricant, a dye, a pigment, etc., if required.

The thickness of the polyester film is not particularly limited, and the polyester film may have any thickness as long as it can be produced while maintaining a suitable film shape. In view of a mechanical strength, a handling property and a productivity of the polyester film, the thickness of the polyester film is usually in the range of 5 to 300 $\mu$m and preferably 10 to 125 $\mu$m.

As the process of forming the polyester film, there may be used conventionally known film-forming processes, though the present invention is not particularly limited thereto. For example, when producing a biaxially oriented polyester film, there may be used the following production process. That is, the above-mentioned polyester raw material is extruded from a die using an extruder in the form of a molten sheet, and the molten sheet is then cooled and solidified on a chilled roll to obtain an undrawn sheet. In this case, in order to enhance a flatness of the obtained sheet, it is preferred to enhance adhesion between the sheet and the rotary chilled drum. For this purpose, an electrostatic pinning method or a liquid coating adhesion method is preferably used. Next, the thus obtained undrawn sheet is is drawn in one direction thereof using a roll-type or tenter-type drawing machine. The drawing temperature is usually 70 to 120°C and preferably 80 to 110°C, and the draw ratio is usually 2.5 to 7 times and preferably 3.0 to 6 times. Next, the thus drawn sheet is further drawn in the direction perpendicular to the drawing direction of the first stage. In this case, the drawing temperature is usually 70 to 170°C, and the draw ratio is usually 2.5 to 7 times and preferably 3.0 to 6 times. Successively, the resulting biaxially drawn sheet is heat-set at a temperature of 180 to 270°C under a tension or under relaxation within 30% to obtain a biaxially oriented film. In the above drawing steps, there may also be used the method in which the drawing in each direction is carried out in two or more stages. In such a case, the multi-stage drawing is preferably performed such that the draw ratio in each of the two directions finally falls within the above-specified range.

In addition, with respect to production of the polyester film, there may also be used a simultaneous biaxial drawing method. The simultaneous biaxial drawing method is such a method in which the above undrawn sheet is drawn and oriented in both of the machine and width directions at the same time while maintaining the sheet in a suitable temperature-controlled condition at a temperature of usually 70 to 120°C and preferably 80 to 110°C. The draw ratio used in the simultaneous biaxial drawing method is 4 to 50 times, preferably 7 to 35 times and more preferably 10 to 25 times in terms of an area ratio of the sheet to be drawn. Successively, the obtained biaxially drawn sheet is heat-set at a temperature of 170 to 270°C under a tension or under relaxation within 30% to obtain a drawn oriented film. As the apparatus used in the above simultaneous biaxial drawing method, there may be employed any conventionally known drawing apparatuses such as a screw type drawing apparatus, a pantograph type drawing apparatus and a linear drive type drawing apparatus.

Next, the method of forming the coating layer constituting the release film of the present invention is explained. As the method of forming the coating layer, there may be used either an in-line coating method in which the surface of the polyester film is subjected to coating treatment during the film-forming step of the polyester film, or an off-line coating method in which the polyester film produced is once transferred to an outside of the film production system and subjected to coating treatment. Among these methods, the coating layer is preferably formed by the in-line coating method.

The in-line coating method is a method in which the coating step is carried out during the process for production of the polyester film, more specifically, such a method in which the coating step is carried out in an optional stage from melt-extrusion of the polyester up to taking-up of the film through the drawing and heat-setting steps. In general, any of the undrawn sheet obtained by melting and rapidly cooling the polyester, the monoaxially drawn film obtained by drawing the undrawn sheet, the biaxially oriented film before the heat-setting, or the film after the heat-setting but before the taking-up may be subjected to the coating step. For example, when the film is produced by a sequential biaxial drawing method, the method in which the monoaxially drawn film obtained by drawing the undrawn sheet in a longitudinal direction

(length direction) thereof is subjected to the coating step, and then the resulting coated monoaxially drawn film is further drawn in a lateral direction thereof is more excellent, though the present invention is not particularly limited thereto. The above method has merits in view of production costs because formation of the film and coating for forming the coating layer can be performed at the same time. In addition, since the drawing is carried out after completion of the coating, the thickness of the coating layer may vary depending upon the draw ratio, so that formation of a thin coating film is facilitated as compared to the off-line coating method. Also, when providing the coating layer on the film prior to the drawing, the coating layer and the base material film can be drawn together, so that adhesion between the coating layer and the base material film can be strengthened. Further, upon production of the biaxial drawn polyester film, when the film is drawn while grasping end portions of the film with clips, etc., it is possible to constrain the film in both of the longitudinal and lateral directions thereof. This allows the polyester film to be exposed to high temperature while keeping a flatness thereof without formation of wrinkles, etc., when subjected to heat-setting. Therefore, the temperature used in the heat-set treatment to be conducted after the coating can be increased up to a high temperature which has not been reached in the other conventional methods, so that the film-forming property of the coating layer can be enhanced, and the adhesion between the coating layer and the base material film can be more strengthened. Furthermore, the resulting coating layer becomes firm, and therefore can be enhanced in properties such as adhesion property to various functional layers to be formed thereon, a wet heat resistance, etc.

In the present invention, it is essentially required to provide the coating layer prepared from a coating solution comprising a release agent and an active methylene blocked isocyanate compound.

The coating layer of the present invention is provided to enhance a releasing performance suitable as a processing film used in various processes, for example, those films for transfer such as in-mold transfer, for production of flexible printed wiring boards, for process sheets for production of plastic sheets, etc.

The release agent used for forming the coating layer serves for enhancing a releasing property of the film. The release agent includes a long-chain alkyl compound, a wax, a fluorine compound and a silicone compound. Of these release agents, the long-chain alkyl compound is preferred because of less staining and an excellent releasing property. These release agents may be used alone or in combination of two or more thereof.

The above long-chain alkyl compound includes those compounds comprising a linear or branched alkyl group having not less than 6 carbon atoms, preferably having not less than 8 carbon atoms and more preferably not less than 12 carbon atoms. The upper limit of the number of carbon atoms in the long-chain alkyl compounds is usually 30. Specific examples of the long-chain alkyl compound include a long-chain alkyl group-containing polyvinyl compound, a long-chain alkyl group-containing acrylic compound, a long-chain alkyl group-containing polyester compound, a long-chain alkyl group-containing amine compound, a long-chain alkyl group-containing ether compound and a long-chain alkyl group-containing quaternary ammonium salt, though not particularly limited thereto. In view of a good heat resistance and less staining of the film, the long-chain alkyl compound is preferably in the form of a polymer compound. Also, in view of a releasing property and a handling property of the film, the long-chain alkyl compound is preferably in the form of the long-chain alkyl group-containing polyvinyl compound.

The above wax includes those waxes selected from natural waxes, synthetic waxes and mixtures of these waxes. Examples of the natural waxes include vegetable waxes, animal waxes, mineral waxes and petroleum waxes. Specific examples of the vegetable waxes include candelilla waxes, carnauba waxes, rice waxes, haze waxes and jojoba oils. Specific examples of the animal waxes include beeswaxes, lanolin and spermaceti waxes. Specific examples of the mineral waxes include montan waxes, ozokerite and ceresin. Specific examples of the petroleum waxes include paraffin waxes, microcrystalline waxes and petrolatum. Specific examples of the synthetic waxes include synthetic hydrocarbons, modified waxes, hydrogenated waxes, fatty acids, acid amides, amines, imides, esters and ketones. As the synthetic hydrocarbons, there are well known Fischer-Tropsch waxes (alias: Sasol Wax), polyethylene waxes or the like. In addition, those polymers having a low molecular weight (specifically, those polymers having a viscosity number-average molecular weight of 500 to 20000) are also included in the synthetic hydrocarbons. Specific examples of the synthetic hydrocarbons include polypropylene, ethylene-acrylic acid copolymers, polyethylene glycol, polypropylene glycol, and blocked or grafted combined products of polyethylene glycol and polypropylene glycol. Specific examples of the modified waxes include montan wax derivatives, paraffin wax derivatives and microcrystalline wax derivatives. The derivatives as used herein mean compounds obtained by subjecting the respective waxes to any treatment selected from refining, oxidation, esterification and saponification, or combination of these treatments. Specific examples of the hydrogenated waxes include hardened castor oils and hardened castor oil derivatives. Of these waxes, in view of a stable performance and a good availability, preferred are the synthetic hydrocarbons, and more preferred are polyethylene oxide waxes and polypropylene oxide waxes.

The above fluorine compound includes those compounds comprising a fluorine atom therein. From the standpoint of a good coating appearance of the in-line coating layer, among these fluorine compounds, organic fluorine compounds are preferably used. Examples of the organic fluorine compounds include perfluoroalkyl group-containing compounds, polymers of fluorine atom-containing olefin compounds, and aromatic fluorine compounds such as fluorobenzene. In view of good heat resistance and anti-staining property, the fluorine compound is preferably in the form of a polymer compound.

The above silicone compound includes those compounds having a silicone structure in a molecule thereof. Examples of the silicone compound include a silicone emulsion, an acrylic-grafted silicone, a silicone-grafted acrylic compound, an amino-modified silicone, a perfluoroalkyl-modified silicone and an alkyl-modified silicone. From the standpoint of a heat resistance and an anti-staining property, the coating layer preferably comprises a curing-type silicone resin. As the curing-type silicone resin, there may be used any of an addition-type silicone, a condensation-type silicone, an UV curing-type silicone, an electron beam curing-type silicone, etc.

The active methylene-blocked isocyanate compound used for forming the coating layer means a compound having such a structure that an isocyanate group of an isocyanate compound as a precursor thereof is protected with an active methylene compound, and has a function of enhancing a wet heat resistance of the release layer.

Examples of the isocyanate compound as a precursor of the active methylene-blocked isocyanate compound include an aliphatic isocyanate compound, an alicyclic isocyanate compound and an aromatic isocyanate compound. In view of exhibiting a higher reactivity and enhancing a heat resistance of the release layer, these isocyanate compounds are preferably used in the form of a compound having a plurality of isocyanate groups, i.e., a polyisocyanate compound, to produce an active methylene-blocked polyisocyanate compound.

Specific examples of the aliphatic polyisocyanate compound include polyisocyanate compounds derived from aliphatic diisocyanates such as tetramethylene diisocyanate, pentamethylene diisocyanate, hexamethylene diisocyanate, 2,2,4-trimethyl-1,6-diisocyanatohexane and lysine diisocyanate, lysine triisocyanate, 4-isocyanato-methyl-1,8-octamethylene diisocyanate, bis(2-isocyanatoethyl) 2-isocyanatoglutarate, and compounds derived from these isocyanate compounds. Among these aliphatic polyisocyanate compounds, from the viewpoint of good industrial availability, preferred is hexamethylene diisocyanate.

Specific examples of the alicyclic polyisocyanate compound include isophorone diisocyanate, 1,3-bis(isocyanatomethyl)cyclohexane, 4,4'-dicyclohexylmethane diisocyanate, norbornene diisocyanate, hydrogenated xylylene diisocyanate and compounds derived from these isocyanate compounds. Among these alicyclic polyisocyanate compounds, from the viewpoints of a good weathering resistance and a good industrial availability, preferred is isophorone diisocyanate.

Specific examples of the aromatic polyisocyanate compound include 2,4-tolylene diisocyanate, 2,6-tolylene diisocyanate, 4,4'-diphenylmethane diisocyanate, naphthalene diisocyanate, xylylene diisocyanate and compounds derived from these isocyanate compounds.

Among these polyisocyanate compounds, preferred are aliphatic polyisocyanate compounds and alicyclic polyisocyanate compounds because they are excellent in weathering resistance. Further, among the aliphatic polyisocyanate compounds, preferred are aliphatic polyisocyanate compounds derived from aliphatic diisocyanates, and more preferred is hexamethylene diisocyanate. These isocyanate compounds may be used alone or in combination of any two or more thereof.

The active methylene-blocked polyisocyanate compound may be synthesized by reacting an isocyanate group of a polyisocyanate compound with an active methylene-based blocking agent.

Examples of the active methylene-based blocking agent include an isobutanoyl acetic acid ester, an n-propanoyl acetic acid ester, an n-butanoyl acetic acid ester, an n-pentanoyl acetic acid ester, an n-hexanoyl acetic acid ester, a 2-ethyl-heptanoyl acetic acid ester, a malonic acid ester, an acetoacetic acid ester and acetyl acetone. Among these active methylene-based blocking agents, from the standpoints of an excellent low-temperature curability and an excellent storage stability even in the presence of water, preferred are an isobutanoyl acetic acid ester, an n-propanoyl acetic acid ester, an n-butanoyl acetic acid ester, an n-pentanoyl acetic acid ester, an n-hexanoyl acetic acid ester and a 2-ethyl-heptanoyl acetic acid ester; more preferred are an isobutanoyl acetic acid ester, an n-propanoyl acetic acid ester and an n-pentanoyl acetic acid ester; and still more preferred is an isobutanoyl acetic acid ester. Specific examples of the isobutanoyl acetic acid ester include methyl isobutanoyl acetate, ethyl isobutanoyl acetate, n-propyl isobutanoyl acetate, isopropyl isobutanoyl acetate, n-butyl isobutanoyl acetate, isobutyl isobutanoyl acetate, t-butyl isobutanoyl acetate, n-pentyl isobutanoyl acetate, n-hexyl isobutanoyl acetate, 2-ethylhexyl isobutanoyl acetate, phenyl isobutanoyl acetate and benzyl isobutanoyl acetate. Among these isobutanoyl acetic acid esters, preferred are methyl isobutanoyl acetate and ethyl isobutanoyl acetate. Specific examples of the n-propanoyl acetic acid ester include methyl n-propanoyl acetate, ethyl n-propanoyl acetate, isopropyl n-propanoyl acetate, n-butyl n-propanoyl acetate and t-butyl n-propanoyl acetate. Among these n-propanoyl acetic acid esters, preferred are methyl n-propanoyl acetate and ethyl n-propanoyl acetate. Specific examples of the n-pentanoyl acetic acid ester include methyl n-pentanoyl acetate, ethyl n-pentanoyl acetate, isopropyl n-pentanoyl acetate, n-butyl n-pentanoyl acetate and t-butyl n-pentanoyl acetate. Among these n-pentanoyl acetic acid esters, preferred are methyl n-pentanoyl acetate and ethyl n-pentanoyl acetate.

As the active methylene-blocked isocyanate compound, the aforementioned active methylene-based blocking agents may be used alone or in combination of any two or more thereof. Preferred examples of the active methylene-based blocking agents that may be used in combination with each other are dimethyl malonate and diethyl malonate from the standpoint of an excellent low-temperature curability and an excellent heat resistance of the release layer formed.

Upon the blocking reaction for production of the active methylene-blocked isocyanate compound, the aforementioned active methylene-based blocking agents may be used in combination with the existing blocking agents. Examples of the existing blocking agents include an oxime-based blocking agent, a pyrazole-based blocking agent, an alcohol-based blocking agent, an alkyl phenol-based blocking agent, a phenol-based blocking agent, a mercaptan-based blocking agent, an acid amide-based blocking agent, an acid imide-based blocking agent, an imidazole-based blocking agent, a urea-based blocking agent, an amine-based blocking agent, an imine-based blocking agent and a bisulfite-based blocking agent. These existing blocking agents may be used alone or in combination of any two or more thereof.

Examples of the oxime-based blocking agent include formaldoxime, acetaldoxime, acetone oxime, methyl ethyl ketoxime and cyclohexanone oxime. Examples of the pyrazole-based blocking agent include pyrazole, 3-methyl pyrazole and 3,5-dimethyl pyrazole. Examples of the alcohol-based blocking agent include methanol, ethanol, 2-propanol, n-butanol, sec-butanol, 2-ethyl-1-hexanol, 2-methoxyethanol, 2-ethoxyethanol and 2-butoxyethanol. Examples of the alkyl phenol-based blocking agent include monoalkyl phenols such as n-propyl phenol, isopropyl phenol, n-butyl phenol, sec-butyl phenol, t-butyl phenol, n-hexyl phenol, 2-ethylhexyl phenol, n-octyl phenol and n-nonyl phenol; and dialkyl phenols such as di-n-propyl phenol, diisopropyl phenol, isopropyl cresol, di-n-butyl phenol, di-t-butyl phenol, di-sec-butyl phenol, di-n-octyl phenol, di-2-ethylhexyl phenol and di-n-nonyl phenol. Examples of the phenol-based blocking agent include phenol, cresol, ethyl phenol, styrenated phenol and a hydroxybenzoic acid ester. Examples of the mercaptan-based blocking agent include butyl mercaptan and dodecyl mercaptan. Examples of the acid amide-based blocking agent include acetanilide, acetic amide, ε-caprolactam, δ-valerolactam and γ-butyrolactam. Examples of the acid imide-based blocking agent include succinic imide and maleic imide. Examples of the imidazole-based blocking agent include imidazole and 2-methyl imidazole. Examples of the urea-based blocking agent include urea, thiourea and ethylene urea. Examples of the amine-based blocking agent include diphenyl amine, aniline, carbazole, di-n-propylamine, diisopropylamine and isopropylethylamine. Examples of the imine-based blocking agent include ethylene imine and polyethylene imine.

The active methylene-blocked isocyanate compound preferably comprises a hydrophilic moiety in order to enhance a blending property thereof in an aqueous coating material. As a method of adding a hydrophilic moiety to the blocked isocyanate-based compound, there may be mentioned, for example, the method of reacting an isocyanate group of an isocyanate compound as a precursor thereof with an active hydrogen-containing hydrophilic compound.

Examples of the active hydrogen-containing hydrophilic compound used for the active methylene-blocked isocyanate compound include a polyethylene glycol-based compound, a carboxylic acid-containing compound, a sulfonic acid-containing compound and an amine-containing compound. These hydrophilic compounds may be used alone or in combination of any two or more thereof.

Examples of the polyethylene glycol-based compound include monoalkoxy polyethylene glycols, polyethylene glycol, polyoxypropylene polyoxyethylene copolymer diols and polyoxypropylene polyoxyethylene block polymer diols. Among these polyethylene glycol-based compounds, preferred are monoalkoxy polyethylene glycols, in particular, such as monomethoxy polyethylene glycol and monoethoxy polyethylene glycol.

Examples of the carboxyl group-containing compound include monohydroxycarboxylic acids, dihydroxycarboxylic acids and derivatives thereof. Among these carboxyl group-containing compounds, preferred are monohydroxycarboxylic acids and dihydroxycarboxylic acids, and more preferred are monohydroxycarboxylic acids.

Specific examples of the carboxyl group-containing compound include hydroxypivalic acid, 2,2-dimethylol propionic acid, 2,2-dimethylol butanoic acid, derivatives of polycaprolactone diols, polyether polyols, etc., obtained using these compounds as an initiator, and salts thereof.

Examples of the sulfonic acid group-containing compound include aminoethylsulfonic acid, ethylene diamino-propyl-$\beta$-ethylsulfonic acid, 1,3-propylene diamine-$\beta$-ethylsulfonic acid, N,N-bis(2-hydroxyethyl)-2-aminoethanesulfonic acid, and salts thereof.

Examples of the amine-containing compound include hydroxy group-containing amino compounds. Specific examples of the hydroxy group-containing amino compounds include dimethyl ethanol amine and diethyl ethanol amine.

Meanwhile, the active methylene-blocked isocyanate compound may be designed to undergo the reaction during a drying step or a film-forming step in order to enhance a performance of the resulting coating layer. It is suggested that the coating layer comprises an unreacted compound of the crosslinking agent, compounds obtained after the reaction, or a mixture thereof.

Upon forming the coating layer of the release film, in order to improve an appearance of the obtained coating layer, enhance a transparency of the coating layer, and control a releasing property of the coating layer, various polymers and crosslinking agents may be used in combination with the aforementioned components.

Specific examples of the polymers include polyester resins, acrylic resins, urethane resins, polyvinyl compounds (such as polyvinyl alcohol and vinyl chloride-vinyl acetate copolymers), polyalkylene glycols, polyalkylene imines, methyl cellulose, hydroxy cellulose, starches, etc. Among these polymers, in view of facilitated control of a releasing property of the resulting film, preferred are polyester resins, acrylic resins and urethane resins, more preferred are polyester resins.

As main constituents of the polyester resins, there may be mentioned the following polycarboxylic acids and polyhydroxy compounds. More specifically, as the polycarboxylic acids, there may be used terephthalic acid, isophthalic acid, orthophthalic acid, phthalic acid, 4,4'-diphenyldicarboxylic acid, 2,5-naphthalenedicarboxylic acid, 1,5-naphthalenedicarboxylic acid, 2,6-naphthalenedicarboxylic acid, 2,7-naphthalenedicarboxylic acid, 1,4-cyclohexanedicarboxylic acid, 2-potassium sulfo-terephthalic acid, 5-sodium sulfo-isophthalic acid, adipic acid, azelaic acid, sebacic acid, dodecanedicarboxylic acid, glutaric acid, succinic acid, trimellitic acid, trimesic acid, pyromellitic acid, trimellitic anhydride, phthalic anhydride, p-hydroxybenzoic acid, trimellitic acid monopotassium salt and ester-forming derivatives thereof. Examples of the polyhydroxy compounds include ethylene glycol, 1,2-propylene glycol, 1,3-propylene glycol, 1,3-propanediol, 1,4-butanediol, 1,6-hexanediol, 2-methyl-1,5-pentanediol, neopentyl glycol, 1,4-cyclohexane dimethanol, p-xylylene glycol, an adduct of bisphenol A with ethylene glycol, diethylene glycol, triethylene glycol, polyethylene glycol, polypropylene glycol, polytetramethylene glycol, polytetramethyleneoxide glycol, dimethylol propionic acid, glycerin, trimethylol propane, sodium dimethylol ethyl sulfonate and potassium dimethylol propionate. The polyester resins may be synthesized by subjecting one or more compounds appropriately selected from the aforementioned compounds of the respective groups to polycondensation reaction by an ordinary method.

The above acrylic resins are in the form of a polymer obtained from a polymerizable monomer having a carbon-carbon double bond such as, typically, an acrylic monomer and a methacrylic monomer. The polymer may be in the form of either a homopolymer or a copolymer. The polymer may also include a copolymer of the polymer with the other polymer (such as, for example, a polyester and a polyurethane). Examples of the copolymer include a block copolymer and a graft copolymer. In addition, the polymer may also include a polymer obtained by polymerizing the polymerizable monomer having a carbon-carbon double bond in a polyester solution or a polyester dispersion (which may also be in the form of a mixture of the polymers). Further, the polymer may also include a polymer obtained by polymerizing the polymerizable monomer having a carbon-carbon double bond in a polyurethane solution or a polyurethane dispersion (which may also be in the form of a mixture of the polymers). Similarly, the polymer may also include a polymer obtained by polymerizing the polymerizable monomer having a carbon-carbon double bond in the other polymer solution or the other polymer dispersion (which may also be in the form of a mixture of the polymers). The acrylic resins may also comprise a hydroxyl group or an amino group.

The above polymerizable monomer having a carbon-carbon double bond is not particularly limited. Examples of the typical compounds as the polymerizable monomer include various carboxyl group-containing monomers such as acrylic acid, methacrylic acid, crotonic acid, itaconic acid, fumaric acid, maleic acid and citraconic acid, and salts thereof; various hydroxyl group-containing monomers such as 2-hydroxyethyl (meth)acrylate, 2-hydroxypropyl (meth)acrylate, 4-hydroxybutyl (meth)acrylate, monobutylhydroxyl fumarate and monobutylhydroxyl itaconate; various (meth)acrylic acid esters such as methyl (meth)acrylate, ethyl (meth)acrylate, propyl (meth)acrylate, butyl (meth)acrylate and lauryl (meth)acrylate; various nitrogen-containing compounds such as (meth)acrylamide, diacetone acrylamide, N-methylol acrylamide and (meth)acrylonitrile; various styrene derivatives such as styrene, $\alpha$-methyl styrene, divinyl benzene and vinyl toluene; various vinyl esters such as vinyl propionate; various silicon-containing polymerizable monomers such as $\gamma$-methacryloxypropyl trimethoxysilane and vinyl trimethoxysilane; various phosphorus-containing vinyl-based monomers; various halogenated vinyl-based monomers such as vinyl chloride and vinylidene chloride; and various conjugated dienes such as butadiene.

The urethane resins are in the form of a polymer compound having a urethane bond in a molecule thereof, and may be usually produced by the reaction between a polyol and an isocyanate. Examples of the polyol include polycarbonate polyols, polyester polyols, polyether polyols, polyolefin polyols and acrylic polyols. These compounds may be used alone or in combination of any two or more thereof.

The polycarbonate polyols may be obtained by subjecting a polyhydric alcohol and a carbonate compound to dealcoholization reaction. Examples of the polyhydric alcohol include ethylene glycol, 1,2-propylene glycol, 1,3-propylene glycol, 1,2-butanediol, 1,3-butanediol, 1,4-butanediol, 1,5-pentanediol, 1,6-hexanediol, 1,4-cyclohexanediol, 1,4-cyclohexane dimethanol, 1,7-heptanediol, 1,8-octanediol, 1,9-nonanediol, 1,10-decanediol, neopentyl glycol, 3-methyl-1,5-pentanediol and 3,3-dimethylol heptane. Examples of the carbonate compound include dimethyl carbonate, diethyl carbonate, diphenyl carbonate and ethylene carbonate. Examples of the polycarbonate polyols obtained by the reaction between the above compounds include poly(1,6-hexylene)carbonate and poly(3-methyl-1,5-pentylene)carbonate.

Examples of the polyester polyols include those compounds produced by reacting a polycarboxylic acid (such as malonic acid, succinic acid, glutaric acid, adipic acid, pimelic acid, suberic acid, sebacic acid, fumaric acid, maleic acid, terephthalic acid and isophthalic acid) or an acid anhydride thereof with a polyhydric alcohol (such as ethylene glycol, diethylene glycol, triethylene glycol, propylene glycol, dipropylene glycol, tripropylene glycol, butanediol, 1,3-butanediol, 1,4-butanediol, 2,3-butanediol, 2-methyl-1,3-propanediol, 1,5-pentanediol, neopentyl glycol, 1,6-hexanediol, 3-methyl-1,5-pentanediol, 2-methyl-2,4-pentanediol, 2-methyl-2-propyl-1,3-propanediol, 1,8-octanediol, 2,2,4-trimethyl-1,3-pentanediol, 2-ethyl-1,3-hexanediol, 2,5-dimethyl-2,5-hexanediol, 1,9-nonanediol, 2-methyl-1,8-octanediol, 2-butyl-2-ethyl-1,3-propanediol, 2-butyl-2-hexyl-1,3-propanediol, cyclohexanediol, bishydroxymethylcyclohexane, dimethanol benzene, bishydroxyethoxybenzene, alkyl dialkanol amines and lactonediol).

Examples of the polyether polyols include polyethylene glycol, polypropylene glycol, polyethylene/propylene glycol, polytetramethylene ether glycol and polyhexamethylene ether glycol.

Examples of a polyisocyanate compound used for producing the urethane resins include aromatic diisocyanates such as tolylene diisocyanate, xylylene diisocyanate, methylene diphenyl diisocyanate, phenylene diisocyanate, naphthalene diisocyanate and tolidine diisocyanate; aromatic ring-containing aliphatic diisocyanates such as $\alpha,\alpha,\alpha',\alpha'$-tetramethyl xylylene diisocyanate; aliphatic diisocyanates such as methylene diisocyanate, propylene diisocyanate, lysine diisocyanate, trimethyl hexamethylene diisocyanate and hexamethylene diisocyanate; and alicyclic diisocyanates such as cyclohexane diisocyanate, methyl cyclohexane diisocyanate, isophorone diisocyanate, dicyclohexylmethane diisocyanate and isopropylidene dicyclohexyl diisocyanate. These polyisocyanate compounds may be used alone or in combination of any two or more thereof.

When the urethane resins are synthesized, there may be used a chain extender. The chain extender is not particularly limited, and any chain extender may be used as long as it has two or more active groups capable of reacting with an isocyanate group. In general, there may be mainly used such a chain extender having two hydroxyl groups or two amino groups.

Examples of the chain extender having two hydroxyl groups include glycols, e.g., aliphatic glycols such as ethylene glycol, propylene glycol and butanediol; aromatic glycols such as xylylene glycol and bishydroxyethoxybenzene; and ester glycols such as neopentyl glycol hydroxypivalate. Examples of the chain extender having two amino groups include aromatic diamines such as tolylenediamine, xylylenediamine and diphenylmethanediamine; aliphatic diamines such as ethylenediamine, propylenediamine, hexanediamine, 2,2-dimethyl-1,3-propanediamine, 2-methyl-1,5-pentanediamine, trimethyl hexanediamine, 2-butyl-2-ethyl-1,5-pentanediamine, 1,8-octanediamine, 1,9-nonanediamine and 1,10-decanediamine; and alicyclic diamines such as 1-amino-3-aminomethyl-3,5,5-trimethyl cyclohexane, dicyclohexylmethanediamine, isopropylidenecyclohexyl-4,4'-diamine, 1,4-diaminocyclohexane and 1,3-bisaminomethyl cyclohexane.

The urethane resins may be dispersed or dissolved in a solvent as a medium, and is preferably dispersed or dissolved in water as the medium. In order to disperse or dissolve the urethane resins in water, there may be used those urethane resins of a forcibly emulsifiable type which can be dispersed and dissolved using an emulsifier, or those urethane resins of a self-emulsifiable type or a watersoluble type which are obtained by introducing a hydrophilic group into the urethane resins. Among these urethane resins, in particular, self-emulsifiable type urethane resins which are ionomerized by introducing an ionic group into a structure of the urethane resins are preferred because they are excellent in storage stability of the coating solution as well as in water resistance and transparency of the resulting coating layer. Examples of the ionic group to be introduced include various groups such as a carboxyl group, a sulfonic acid group, a phosphoric acid group, a phosphonic acid group and a quaternary ammonium group. Among these ionic groups, preferred is a carboxyl group. As the method of introducing a carboxyl group into the urethane resins, there may be used various methods which may be carried out in respective stages of the polymerization reaction. For example, there may be used the method in which a carboxyl group-containing resin is used as a comonomer component upon synthesis of a prepolymer, or the method in which a carboxyl group-containing component is used as one of the components including the polyol, the polyisocyanate, the chain extender or the like. In particular, there is preferably used the method in which a carboxyl group-containing diol is used to introduce a desired amount of a carboxyl group into the urethane resins by suitably adjusting an amount of the diol charged. For example, the diol used in the polymerization for production of the urethane resins may be copolymerized with dimethylol propionic acid, dimethylol butanoic acid, bis-(2-hydroxyethyl)propionic acid, bis-(2-hydroxyethyl)butanoic acid, etc. Further, the carboxyl group is preferably in the form of a salt obtained by neutralizing the carboxyl group with ammonia, an amine, an alkali metal, an inorganic alkali, etc. Of these substances used for the neutralization, preferred are ammonia, trimethylamine and triethylamine. When using such a polyurethane resin, the carboxyl group thereof from which the neutralizing agent is removed in the drying step after the coating step may be used as a crosslinking reaction site which can be reacted with other crosslinking agents. As a result, the above-described urethane resin is excellent in stability when preserved in the form of a solution before being coated, and further the coating layer obtained therefrom can be further improved in durability, solvent resistance, water resistance, anti-blocking property, etc.

Also, unless the subject matter of the present invention is adversely affected, upon forming the coating layer, for the purpose of improving an anti-blocking property, a slipping property, etc., of the resulting coating layer, particles may be used in combination with the aforementioned materials in the coating layer.

Further, unless the subject matter of the present invention is adversely affected, upon forming the coating layer, there may also be used various additives such as a defoaming agent, a coatability improver, a thickening agent, an organic lubricant, an antistatic agent, an ultraviolet absorber, an antioxidant, a foaming agent, a dye and a pigment, if required.

The content of the release agent in the coating solution is usually in the range of 5 to 97% by weight, preferably 10 to 90% by weight and more preferably 20 to 80% by weight based on a total amount of whole non-volatile components in the coating solution. When the content of the release agent in the coating solution is less than 5% by weight, the resulting coating layer tends to fail to exhibit a sufficient releasing performance. When the content of the release agent in the coating solution is more than 97% by weight, the resulting coating layer tends to fail to exhibit a sufficient heat resistance owing to a less amount of other components.

The content of the active methylene-blocked isocyanate compound in the coating solution is usually 3 to 95% by weight, preferably 10 to 90% by weight and more preferably 20 to 75% by weight based on a total amount of whole non-volatile components in the coating solution. When the content of the active methylene-blocked isocyanate compound in the coating solution is out of the above-specified range, the resulting coating layer tends to fail to exhibit a sufficient releasing performance after heating.

The analysis of the components contained in the coating layer may be conducted, for example, by analyzing methods such as TOF-SIMS, ESCA and fluorescent X-ray analysis.

When forming the coating layer by the in-line coating method, the release film is preferably produced by the method in which a coating solution having a concentration of about 0.1 to about 50% by weight in terms of a solid content thereof is prepared as an aqueous solution or a water dispersion comprising a series of the aforementioned compounds, and the thus prepared coating solution is applied onto the polyester film. The coating solution may also comprise a small amount of an organic solvent for the purpose of improving a dispersibility in water, a film-forming property, etc., unless the subject matter of the present invention is adversely affected by addition of the organic solvent. The organic solvents may be used alone, or may be appropriately used in the form of a mixture of any two or more thereof.

The film thickness of the coating layer formed on the polyester film is usually in the range of 0.003 to 1 $\mu$m, preferably 0.005 to 0.5 $\mu$m and more preferably 0.01 to 0.2 $\mu$m. When the film thickness of the coating layer is more than 1 $\mu$m, the resulting coating layer tends to be deteriorated in appearance and transparency. When the film thickness of the coating layer is less than 0.005 $\mu$m, the resulting coating layer tends to fail to exhibit a sufficient releasing performance.

As the method of forming the coating layer, there may be used conventionally known coating methods, for example, such as a gravure coating method, a reverse roll coating method, a die coating method, an air doctor coating method, a blade coating method, a rod coating method, a bar coating method, a curtain coating method, a knife coating method, a transfer roll coating method, a squeeze coating method, an impregnation coating method, a kiss-roll coating method, a spray coating method, a calender coating method and an extrusion coating method.

The drying and curing conditions used upon forming the coating layer on the polyester film are not particularly limited. For example, in the case where the coating layer is formed by an off-line coating method, the coating layer may be subjected to heat-setting usually at a temperature of 80 to 200°C for 3 to 40 sec and preferably at a temperature of 100 to 180°C for 3 to 40 sec.

On the other hand, in the case where the coating layer is formed by an in-line coating method, the coating layer may be subjected to heat-setting usually at a temperature of 70 to 270°C for 3 to 200 sec.

In addition, irrespective of any of the off-line coating method and in-line coating method, the above heat-setting may be used in combination with irradiation with an active energy beam such as UV irradiation. The polyester film constituting the release film may also be previously subjected to surface treatments such as corona treatment and plasma treatment.

EXAMPLES

The present invention is described in more detail below by Examples. However, these Examples are only illustrative and not intended to limit the present invention thereto, and any changes and modifications are possible unless departing from the scope of the present invention. In addition, the measuring and evaluating methods used in the present invention are as follows.

(1) Method of measuring intrinsic viscosity of polyester:

One gram of a polyester from which the other polymer components incompatible with the polyester and pigments were previously removed was accurately weighed, and mixed with and dissolved in 100 mL of a mixed solvent comprising phenol and tetrachloroethane at a weight ratio of 50:50, and a viscosity of the resulting solution was measured at 30°C.

(2) Method of measuring average particle diameter:

Using TEM ("H-7650" manufactured by Hitachi High-Technologies Corp.; acceleration voltage: 100 V), the coating layer was observed to measure particle diameters of 10 particles therein and calculate an average particle diameter thereof as an average value of the thus measured ten particle diameters.

(3) Method of measuring film thickness of coating layer:

The surface of the coating layer was dyed with $RuO_4$, and the resulting film was embedded in an epoxy resin. Thereafter, the resin-embedded film was cut into a piece by an ultrathin sectioning method, and the cut piece was dyed with $RuO_4$ to observe and measure a cut section of the coating layer using TEM ("H-7650" manufactured by Hitachi High-Technologies Corp.; acceleration voltage: 100 V).

(4) Evaluation of peel force of release film before heating:

An adhesive tape "No. 31B" produced by by Nitto Denko Corporation was press-contacted and attached onto a surface of a release layer of a sample film by reciprocating a 2 kg rubber roller thereover by one stroke, and the resulting laminated film was allowed to stand at room temperature for 1 hr and then subjected to measurement of a peel force thereof. Upon the measurement of the peel force, the film was subjected to 180° peel test at an elastic stress rate of 300 mm/min using a tensile tester "Ezgraph" produced by Shimadzu Corporation. The peel force before heating is preferably not more than 2000 mN/cm, more preferably not more than 1500 mN/cm, and still more preferably not more than 1000 mN/cm. When the peel force before heating is more than 2000 mN/cm, a material laid on the release layer tends to be hardly peeled off before and after heating.

(5) Evaluation of peel force of release film after heating:

An adhesive tape "No. 31B" produced by by Nitto Denko Corporation was press-contacted and attached onto a surface of a release layer of a sample film by reciprocating a 2 kg rubber roller thereover by one stroke, and the resulting laminated film was heated in an oven at 100°C for 1 hr. Thereafter, the film was allowed to stand at room temperature for 1 hr and then subjected to measurement of a peel force thereof. Upon the measurement of the peel force, the film was subjected to 180° peel test at an elastic stress rate of 300 mm/min using a tensile tester "Ezgraph" produced by Shimadzu Corporation. The peel force after heating may vary depending upon the peel force before heating, and is preferably not more than 2500 mN/cm, more preferably not more than 2000 mN/cm, and still more preferably not more than 1500 mN/cm. When the peel force after heating is more than 2500 mN/cm, a material laid on the release layer tends to be hardly peeled off after heating and processing.

(6) Evaluation of heat resistance of release layer:

In view of facilitated control of a peel force of a release layer before and after heating, the value obtained by comparison between peel forces before and after heating which is represented by the following formula:

```
Difference in peel force upon heating = (peel force

after heating - peel force before heating)
```

is not more than 2000 mN/cm, preferably not more than 1600 mN/cm, and more preferably not more than 1200 mN/cm.

The polyesters used in Examples and Comparative Examples were prepared as follows.

<Method for producing polyester (A)>

One hundred parts by weight of dimethyl terephthalate and 60 parts by weight of ethylene glycol as starting materials were charged together with 0.09 part by weight of magnesium acetate tetrahydrate as a catalyst into a reactor, and the reaction therebetween was initiated at 150°C. The reaction temperature was gradually raised while distilling off methanol produced, and allowed to reach 230°C after 3 hr. After 4 hr, the transesterification reaction was substantially terminated. The obtained reaction mixture was mixed with 0.04 part by weight of ethyl acid phosphate. Further, the reaction mixture thus obtained was mixed with 0.04 part by weight of antimony trioxide, followed by subjecting the mixture to polycondensation reaction for 4 hr. More specifically, the reaction temperature was gradually raised from 230°C until reaching 280°C. On the other hand, the reaction pressure was gradually reduced from normal pressure until finally reaching 0.3 mmHg. After initiation of the reaction, an agitation power in the reaction vessel was monitored, and the reaction was terminated at the time at which a viscosity of the reaction solution reached the value corresponding to an intrinsic viscosity of 0.63, which was determined by the change in agitation power in the reaction vessel. The resulting polymer was discharged under application of a nitrogen pressure from the reaction vessel. As a result, it was confirmed that the thus obtained polyester (A) had an intrinsic viscosity of 0.63.

<Method for producing polyester (B)>

The same procedure as described in the above method for producing the polyester (A) was conducted except that after adding 0.04 part by weight of ethyl acid phosphate, 0.2 part by weight of silica particles having an average particle diameter of 2 $\mu$m, and 0.04 part by weight of antimony trioxide were added, and the polycondensation reaction was terminated at the time at which a viscosity of the reaction solution reached the value corresponding to an intrinsic viscosity of 0.65, thereby obtaining a polyester (B). As a result, it was confirmed that the thus obtained polyester (B) had an intrinsic viscosity of 0.65.

Examples of the compounds constituting the coating layer are as follows.

(Examples of compounds)

• Release agent (long-chain alkyl compound) (I):

A four-necked flask was charged with 200 parts of xylene and 600 parts of octadecyl isocyanate, and the contents of the flask were heated while stirring. From the time at which reflux of xylene was initiated, 100 parts of polyvinyl alcohol having an average polymerization degree of 500 and a saponification degree of 88 mol% were slowly added to the flask at the intervals of 10 min over about 2 hr. After completion of addition of polyvinyl alcohol, the contents of the flask were further refluxed for 2 hr, and the reaction was stopped. The obtained reaction mixture was cooled to about 80°C and then added in methanol, thereby obtaining a reaction product in the form of a white precipitate. The thus obtained precipitate was removed by filtration, and 140 parts of xylene were added thereto to completely dissolve the precipitate therein, followed by adding methanol again to the resulting solution to obtain a precipitate. The above procedure was repeated several times. Thereafter, the obtained precipitate was washed with methanol, and then dried and pulverized to obtain the release agent as aimed.

• Active methylene-blocked polyisocyanate (II):

(Blocked polyisocyanate synthesized by the following method)

One thousand parts of hexamethylene diisocyanate were stirred at 60°C, and 0.1 part of tetramethyl ammonium caprylate as a catalyst was added thereto. After 4 hr, 0.2 part of phosphoric acid was added to the reaction solution to terminate the reaction, thereby obtaining an isocyanurate-type polyisocyanate composition. One hundred parts of the thus obtained isocyanurate-type polyisocyanate composition, 42.3 parts of methoxy polyethylene glycol having a number-average molecular weight of 400 and 29.5 parts of propylene glycol monomethyl ether acetate were charged into a reactor and held therein at 80°C for 7 hr. Thereafter, while the resulting reaction solution was held at 60°C, 35.8 parts of methyl isobutanoyl acetate, 32.2 parts of diethyl malonate and 0.88 part of a 28% methanol solution of sodium methoxide were added thereto, followed by allowing the resulting mixture to stand for 4 hr. In addition, 58.9 parts of n-butanol were added to the mixture, and then the resulting reaction solution was held at 80°C for 2 hr, and thereafter 0.86 part of 2-ethylhexyl acid phosphate was added thereto, thereby obtaining a blocked polyisocyanate.

• Polyester resin (IIIA):

(Water dispersion of polyester resin obtained by copolymerizing the following composition)

Monomer composition: (acid component) terephthalic acid/isophthalic acid/5-sodium sulfoisophthalic acid//(diol component) ethylene glycol/1,4-butanediol/diethylene glycol = 56/40/4//70/20/10 (mol%)

• Acrylic resin (IIIB):

(Water dispersion of acrylic resin obtained by polymerizing the following composition)

Emulsion polymer (emulsifier: anionic surfactant) produced from ethyl acrylate/n-butyl acrylate/methyl methacrylate/N-methylol acrylamide/acrylic acid = 65/21/10/2/2 (% by weight)

• Urethane resin (IIIC):

Carboxylic acid-water-dispersed type polyester-based urethane resin comprising an isophorone diisocyanate unit, a terephthalic acid unit, an isophthalic acid unit, an ethylene glycol unit, a diethylene glycol unit and a dimethylol propionic acid unit at a ratio of 12:19:18:21:25:5 (mol%).

• Epoxy compound (IVA):

Polyglycerol polyglycidyl ether

• Isocyanate compound (IVB):

(Blocked polyisocyanate synthesized by the following method)

Added to 2000 parts by weight of a polyester (molecular weight: 2000) produced from a 2 mol ethyleneoxide adduct of bisphenol A and maleic acid was 33.6 parts by weight of hexamethylene diisocyanate, and the obtained mixture was reacted at 100°C for 2 hr. Then, the temperature of the reaction system was once cooled to 50°C, and 73 parts by weight of a 30% sodium bisulfite aqueous solution was added thereto, and the obtained reaction solution was stirred at 45°C for 60 min, and then diluted with 718 parts by weight of water to obtain a blocked isocyanate-based compound.

• Hexamethoxymethylol melamine: (IVC)

Example 1:

A mixed raw material obtained by mixing the polyesters (A) and (B) in amounts of 90% and 10%, respectively, as a raw material for outermost layers (surface layers), and a raw material for an intermediate layer comprising the polyester (A) solely, were respectively charged into two extruders, melted therein at 285°C, and then co-extruded therefrom on a chilled roll whose surface was controlled to a temperature of 40°C, into a two-kind/three-layer structure (surface layer/intermediate layer/surface layer = 1:8:1 as output), followed by cooling and solidifying the thus extruded sheet on the chilled roll, thereby obtaining an undrawn sheet. Next, the thus obtained undrawn sheet was drawn utilizing a difference between peripheral speeds of rolls at a film temperature of 85°C at a draw ratio of 3.4 times in a longitudinal direction thereof. Thereafter, a coating solution 1 shown in the below-mentioned Table 1 was applied on one surface of the thus obtained longitudinally drawn sheet. Then, the resulting coated sheet was introduced into a tenter where the sheet was drawn at 110°C at a draw ratio of 4.3 times in a lateral direction thereof and then heat-set at 235°C. Thereafter, the obtained drawn sheet was relaxed by 2% in a lateral direction thereof, thereby obtaining a polyester film having a thickness of 50 $\mu$m which was provided on one surface thereof with a release layer having a thickness of 0.03 $\mu$m (after dried).

As a result of evaluating a releasing property of the thus obtained polyester film, it was confirmed that the film exhibited a good releasing property both before and after heating, and a less variation in peel force owing to heating. The properties of the film are shown in Table 2 below.

Examples 2 to 17:

The same procedure as in Example 1 was conducted except that the coating agent composition was changed to those shown in Table 1, thereby obtaining polyester films. Properties of the obtained polyester films were as shown in Table 2, i.e., the polyester films exhibited a good releasing property.

Comparative Example 1

The same procedure as in Example 1 was conducted except that no coating layer was provided, thereby obtaining a polyester film. As a result of evaluating the resulting release film, it was confirmed that properties of the release film were as shown in Table 2, i.e., the release film exhibited a poor releasing property.

Comparative Examples 2 to 8:

The same procedure as in Example 1 was conducted except that the coating agent composition was changed to those shown in Table 1, thereby obtaining polyester films. As a result of evaluating the thus obtained release films, it was confirmed that properties of the release films were as shown in Table 2, i.e., the release films exhibited a poor releasing property before and after heating or suffered from significant variation in peel force owing to heating.

Table 1

| Coating solutions | Coating agent composition (wt%) | | | | | | | |
|---|---|---|---|---|---|---|---|---|
| | I | II | IIIA | IIIB | IIIC | IVA | IVB | IVC |
| 1 | 10 | 90 | 0 | 0 | 0 | 0 | 0 | 0 |
| 2 | 20 | 80 | 0 | 0 | 0 | 0 | 0 | 0 |
| 3 | 40 | 60 | 0 | 0 | 0 | 0 | 0 | 0 |
| 4 | 50 | 50 | 0 | 0 | 0 | 0 | 0 | 0 |
| 5 | 70 | 30 | 0 | 0 | 0 | 0 | 0 | 0 |
| 6 | 90 | 10 | 0 | 0 | 0 | 0 | 0 | 0 |
| 7 | 20 | 50 | 30 | 0 | 0 | 0 | 0 | 0 |
| 8 | 40 | 30 | 30 | 0 | 0 | 0 | 0 | 0 |
| 9 | 40 | 30 | 0 | 30 | 0 | 0 | 0 | 0 |
| 10 | 40 | 30 | 0 | 0 | 30 | 0 | 0 | 0 |
| 11 | 60 | 10 | 30 | 0 | 0 | 0 | 0 | 0 |
| 12 | 50 | 30 | 20 | 0 | 0 | 0 | 0 | 0 |
| 13 | 10 | 30 | 60 | 0 | 0 | 0 | 0 | 0 |
| 14 | 40 | 50 | 10 | 0 | 0 | 0 | 0 | 0 |
| 15 | 100 | 0 | 0 | 0 | 0 | 0 | 0 | 0 |
| 16 | 0 | 100 | 0 | 0 | 0 | 0 | 0 | 0 |

(continued)

| Coating solutions | Coating agent composition (wt%) | | | | | | | |
|---|---|---|---|---|---|---|---|---|
| | I | II | IIIA | IIIB | IIIC | IVA | IVB | IVC |
| 17 | 50 | 0 | 0 | 0 | 0 | 50 | 0 | 0 |
| 18 | 50 | 0 | 0 | 0 | 0 | 0 | 50 | 0 |
| 19 | 40 | 0 | 30 | 0 | 0 | 30 | 0 | 0 |
| 20 | 40 | 0 | 30 | 0 | 0 | 0 | 30 | 0 |
| 21 | 40 | 0 | 30 | 0 | 0 | 0 | 0 | 30 |

Table 2

| Examples and Comp. Examples | Coating solution | Thickness ($\mu$m) | Peel force (mN/cm) | | |
|---|---|---|---|---|---|
| | | | Before heating | After heating | Difference in peel force between before and after heating |
| Example 1 | 1 | 0.03 | 1130 | 1840 | 710 |
| Example 2 | 2 | 0.03 | 250 | 1470 | 1220 |
| Example 3 | 3 | 0.03 | 210 | 1220 | 1010 |
| Example 4 | 4 | 0.01 | 200 | 1230 | 1030 |
| Example 5 | 4 | 0.03 | 210 | 1220 | 1010 |
| Example 6 | 4 | 0.05 | 220 | 1260 | 1040 |
| Example 7 | 4 | 0.10 | 230 | 1210 | 980 |
| Example 8 | 5 | 0.03 | 140 | 1170 | 1030 |
| Example 9 | 6 | 0.03 | 100 | 1320 | 1220 |
| Example 10 | 7 | 0.03 | 290 | 1350 | 1060 |
| Example 11 | 8 | 0.03 | 190 | 1300 | 1110 |
| Example 12 | 9 | 0.03 | 160 | 1080 | 920 |
| Example 13 | 10 | 0.03 | 160 | 1130 | 970 |
| Example 14 | 11 | 0.03 | 110 | 1350 | 1240 |
| Example 15 | 12 | 0.03 | 170 | 1220 | 1050 |
| Example 16 | 13 | 0.03 | 370 | 1570 | 1200 |
| Example 17 | 14 | 0.03 | 210 | 1290 | 1080 |
| Comp. Example 1 | - | - | 2980 | 3810 | 830 |
| Comp. Example 2 | 15 | 0.03 | 80 | 3380 | 3300 |
| Comp. Example 3 | 16 | 0.03 | 3490 | 6400 | 2910 |
| Comp. Example 4 | 17 | 0.03 | 70 | 3710 | 3640 |
| Comp. Example 5 | 18 | 0.03 | 70 | 3390 | 3320 |
| Comp. Example 6 | 19 | 0.03 | 80 | 3430 | 3350 |
| Comp. Example 7 | 20 | 0.03 | 80 | 3740 | 3660 |
| Comp. Example 8 | 21 | 0.03 | 80 | 2340 | 2260 |

INDUSTRIAL APPLICABILITY

The release film of the present invention can be suitably used, in particular, in the applications requiring a heat resistance, for example, as a processing film used in various processes, including those films for transfer such as in-mold transfer, for production of flexible printed wiring boards, for process sheets for production of plastic sheets, etc.

**Claims**

1.  A release film comprising a polyester film and a coating layer formed on at least one surface of the polyester film, the coating layer being prepared from a coating solution comprising a release agent and an active methylene blocked isocyanate compound,
    wherein the release agent comprises at least one material selected from the group consisting of a long-chain alkyl compound, a wax, a fluorine compound and a silicone compound, and, wherein the long-chain alkyl compound is at least one compound selected from the group consisting of a long-chain alkyl group-containing polyvinyl compound, a long-chain alkyl group-containing acrylic compound, a long-chain alkyl group-containing polyester compound, a long-chain alkyl group-containing amine compound, a long-chain alkyl group-containing ether compound and a long-chain alkyl group-containing quaternary ammonium salt, in which the long-chain alkyl group has 6 to 30 carbon atoms.

2.  The release film according to claim 1, wherein the release agent and the active methylene blocked isocyanate compound are present in the coating solution in amounts of 5 to 97% by weight and 3 to 95% by weight, respectively, based on whole nonvolatile components in the coating solution.

3.  The release film according to any one of claims 1 to 2, wherein the active methylene blocked isocyanate compound is obtained by reacting an isocyanate group of a polyisocyanate compound with an active methylene-based blocking agent.

4.  The release film according to any one of claims 1 to 3, wherein the active methylene-based blocking agent is at least one compound selected from the group consisting of an isobutanoyl acetic acid ester, an n-propanoyl acetic acid ester, an n-butanoyl acetic acid ester, an n-pentanoyl acetic acid ester, an n-hexanoyl acetic acid ester, a 2-ethyl-heptanoyl acetic acid ester, a malonic acid ester, an acetoacetic acid ester and acetyl acetone.

5.  The release film according to any one of claims 1 to 4, wherein the active methylene-based blocking agent is comprises at least dimethyl malonate and/or diethyl malonate.

**Patentansprüche**

1.  Ablösefolie, umfassend eine Polyesterfolie und eine auf mindestens einer Oberfläche der Polyesterfolie gebildete Beschichtungsschicht, wobei die Beschichtungsschicht aus einer Beschichtungslösung hergestellt ist, die ein Trennmittel und eine aktive methylenblockierte Isocyanatverbindung umfasst,
    wobei das Trennmittel mindestens ein Material umfasst, das aus der Gruppe bestehend aus einer langkettigen Alkylverbindung, einem Wachs, einer Fluorverbindung und einer Silikonverbindung ausgewählt ist, und wobei die langkettige Alkylverbindung mindestens eine Verbindung ist, die aus der Gruppe bestehend aus einer Polyvinylverbindung mit langkettigen Alkylgruppen, einer Acrylverbindung mit langkettigen Alkylgruppen, einer Polyesterverbindung mit langkettigen Alkylgruppen, einer Aminverbindung mit langkettigen Alkylgruppen, einer Etherverbindung mit langkettigen Alkylgruppen und einem quaternären Ammoniumsalz mit langkettigen Alkylgruppen ausgewählt ist, wobei die langkettige Alkylgruppe 6 bis 30 Kohlenstoffatome aufweist.

2.  Ablösefolie nach Anspruch 1, wobei das Trennmittel und die aktive methylenblockierte Isocyanatverbindung in der Beschichtungslösung bezogen auf die gesamten nichtflüchtigen Bestandteile in der Beschichtungslösung in Mengen von 5 bis 97 Gew.-% bzw. 3 bis 95 Gew.-%, vorhanden sind.

3.  Ablösefolie nach einem der Ansprüche 1 bis 2, wobei die aktive methylenblockierte Isocyanatverbindung durch Umsetzung einer Isocyanatgruppe einer Polyisocyanatverbindung mit einem aktiven Blockierungsmittel auf Methylenbasis erhalten wird.

4.  Ablösefolie nach einem der Ansprüche 1 bis 3, wobei das aktive Blockierungsmittel auf Methylenbasis mindestens eine Verbindung ist, die aus der Gruppe bestehend aus einem Isobutanoylessigsäureester, einem n-Propanoylessigsäureester, einem n-Butanoylessigsäureester, einem n-Pentanoylessigsäureester, einem n-Hexanoylessigsäureester, einem 2-Ethylheptanoylessigsäureester, einem Malonsäureester, einem Acetessigsäureester und Acetylaceton ausgewählt ist.

**5.** Ablösefolie nach einem der Ansprüche 1 bis 4, wobei das aktive Blockierungsmittel auf Methylenbasis mindestens Dimethylmalonat und/oder Diethylmalonat umfasst.

**Revendications**

**1.** Film anti-adhésif comprenant un film de polyester et une couche de revêtement formée sur au moins une surface du film de polyester, la couche de revêtement étant préparée à partir d'une solution de revêtement comprenant un agent anti-adhésif et un composé d'isocyanate bloqué par méthylène actif,
dans lequel l'agent anti-adhésif comprend au moins une matière choisie dans le groupe consistant en un composé à alkyle à longue chaîne, une cire, un composé du fluor et un composé de silicone, et, dans lequel le composé à alkyle à longue chaîne est au moins un composé choisi dans le groupe consistant en un composé polyvinylique à teneur en groupe alkyle à longue chaîne, un composé acrylique à teneur en groupe alkyle à longue chaîne, un composé polyester à teneur en groupe alkyle à longue chaîne, un composé amine à teneur en groupe alkyle à longue chaîne, un composé éther à teneur en groupe alkyle à longue chaîne et un sel d'ammonium quaternaire à teneur en groupe alkyle à longue chaîne, dans lequel le groupe alkyle à longue chaîne a de 6 à 30 atomes de carbone.

**2.** Film anti-adhésif selon la revendication 1, dans lequel l'agent anti-adhésif et le composé d'isocyanate bloqué par méthylène actif sont présents dans la solution de revêtement dans des quantités de respectivement 5 à 97 % en poids et 3 à 95 % en poids, sur la base des composants non volatils dans la solution de revêtement.

**3.** Film anti-adhésif selon l'une quelconque des revendications 1 à 2, dans lequel le composé d'isocyanate bloqué par méthylène actif est obtenu par réaction d'un groupe isocyanate d'un composé polyisocyanate avec un agent de blocage à base de méthylène actif.

**4.** Film anti-adhésif selon l'une quelconque des revendications 1 à 3, dans lequel l'agent de blocage à base de méthylène actif est au moins un composé choisi dans le groupe consistant en un ester d'acide isobutanoyl acétique, un ester d'acide n-propanoyl acétique, un ester d'acide n-butanoyl acétique, un ester d'acide n-pentanoyl acétique, un ester d'acide n-hexanoyl acétique, un ester d'acide 2-éthyl-heptanoyl acétique, un ester d'acide malonique, un ester d'acide acétoacétique et l'acétyl acétone.

**5.** Film anti-adhésif selon l'une quelconque des revendications 1 à 4, dans lequel l'agent de blocage à base de méthylène actif comprend au moins du malonate de diméthyle et / ou du malonate de diéthyle.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002240016 A
- JP 2006022136 A